(19) Europäisches Patentamt
European Patent Office
Office européen des brevets

(11) **EP 4 122 796 B1**

(12) **EUROPÄISCHE PATENTSCHRIFT**

(45) Veröffentlichungstag und Bekanntmachung des Hinweises auf die Patenterteilung:
**15.04.2026   Patentblatt 2026/16**

(21) Anmeldenummer: **22181140.9**

(22) Anmeldetag: **27.06.2022**

(51) Internationale Patentklassifikation (IPC):
**B61L 25/02** $^{(2006.01)}$      **G01C 21/00** $^{(2006.01)}$

(52) Gemeinsame Patentklassifikation (CPC):
**G01C 21/005; B61L 25/025**

(54) **VERFAHREN UND EINRICHTUNG ZUR ÜBERPRÜFUNG VON KARTENDATEN UND/ODER SENSORDATEN**

METHOD AND DEVICE FOR CHECKING CARD DATA AND / OR SENSOR DATA

PROCÉDÉ ET DISPOSITIF DE VÉRIFICATION DES DONNÉES DE CARTE ET/OU DE DONNÉES DE CAPTEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.07.2021   DE 102021207482**

(43) Veröffentlichungstag der Anmeldung:
**25.01.2023   Patentblatt 2023/04**

(73) Patentinhaber: **Siemens Mobility GmbH**
**80997 München (DE)**

(72) Erfinder: **Johannes, Lars**
**38108 Braunschweig (DE)**

(74) Vertreter: **Siemens Patent Attorneys**
**Postfach 22 16 34**
**80506 München (DE)**

(56) Entgegenhaltungen:
DE-A1- 102019 218 611     US-A1- 2009 210 154

# EP 4 122 796 B1

## Beschreibung

Die Erfindung betrifft ein Verfahren und eine Einrichtung zur Überprüfung von Kartendaten und Sensordaten, wobei die Kartendaten und Sensordaten für eine Positionsbestimmung eines spurgeführten Fahrzeugs, insbesondere eines Schienenfahrzeugs, verwendbar sind.

Aus der US 2009/210154 A1 ist ein System zur Bestimmung einer Position und Positionsunsicherheit von einem Schienenfahrzeug bekannt, bei dem eine vorbestimmten Streckenkarte, ein GPS-Navigationssystem und weitere Sensoren verwendet werden.

Die DE 10 2019 218 611 A1 betrifft ein Verfahren zum Betreiben eines Fahrzeugs, bei dem aus Streckendaten und Ortungsdaten Abstandswerte berechnet und ausgewertet werden.

Im eisenbahntechnischen Bereich finden Kartendaten zunehmend Verwendung für Lokalisierungsaufgaben von schienengebundenen Fahrzeugen. Dabei wird üblicherweise davon ausgegangen, dass die Kartendaten mit einer hohen Genauigkeit von teilweise bis zu +/- 2 cm und genauer zur Verfügung stehen. Aus unterschiedlichen Gründen kann diese Genauigkeit aber nicht immer garantiert werden. Weiterhin können die Kartendaten neben dem Genauigkeitsaspekt auch systematische und grobe Fehler enthalten. Beispielsweise können solche Fehler entstehen durch:

- Änderungen des Gleisverlaufs werden nach dem Abschluss von Bauarbeiten nicht oder zu spät oder auch falsch im Kartenmaterial aktualisiert;
- Gleise werden in Kurvenbereichen nach außen gedrückt, so dass die Gleislage auf Dauer nicht mit den Kartendaten übereinstimmt;
- Menschliche Fehler bei der Erstellung von Kartendaten durch z.B. Verwechslung von Punkten, Koordinaten, IDs oder Streckenbereichen;
- Menschliche Fehler im Aktualisierungsprozess;
- Fehler durch Übertragung falscher Kartendaten, z.B. temporär aktuelle Kartendaten aufgrund von Bautätigkeiten.

Ein fehlerhaftes Kartenmaterial mit fehlerhaften Kartendaten kann zu einer fehlerhaften Lokalisierung der schienengebundenen Fahrzeuge und damit im schlimmsten Fall sogar zu Unfällen führen.

Es ist daher die Aufgabe der vorliegenden Erfindung, ein Verfahren und eine Einrichtung der eingangs genannten Art bereitzustellen, um die Verwendung von fehlerhaften Kartendaten zu verhindern.

Die Erfindung löst die Aufgabe durch ein Verfahren zur Überprüfung von Kartendaten und Sensordaten nach Anspruch 1.

Ferner löst die Erfindung die Aufgabe auch durch eine Einrichtung zur Überprüfung von Kartendaten und Sensordaten nach Anspruch 6.

Durch die erfindungsgemäße Lösung können nicht tolerierbare Fehler in den Kartendaten erkannt werden und entsprechende Maßnahmen ergriffen werden. Wenn nämlich der Gesamtfehlerwert den vorbestimmten Grenzwert überschreitet, muss von fehlerhaften Kartendaten oder fehlerhaften Sensordaten ausgegangen werden. Beides ist nicht tolerierbar. Anschließend kann beispielsweise ein Warnhinweis an den Fahrzeugführer und/oder die Leitstelle gegeben werden und beispielsweise der Betrieb in einen abgesicherten Modus umgestellt werden.

Bei dem erfindungsgemäßen Verfahren werden zunächst Sensordaten von wenigstens einem Sensor bereitgestellt, der üblicherweise am Fahrzeug angeordnet ist. Solch ein Sensor kann beispielsweise ein GNSS-Sensor zur Satellitennavigation sein oder auch ein oder mehrere Sensoren zur triaxialen Beschleunigungs- und Drehratenerfassung. Weitere bei der Positionsbestimmung eines spurgeführten Fahrzeugs verwendbare Sensoren sind selbstverständlich möglich. Alternativ zu den am Fahrzeug angeordneten Sensoren sind auch beispielsweise streckenseitige Sensoren verwendbar, die beispielsweise mittels Fibre-Optic Technologie die Position des spurgeführten Fahrzeugs bestimmen.

Für die Berechnung des Gesamtfehlerwerts kann der Differenzwert allein oder als einer von mehreren Faktoren verwendet werden. Der Gesamtfehlerwert kann anschließend auf sehr einfache Weise mit dem vorbestimmten Grenzwert verglichen werden und bei Überschreiten wie bereits oben beschrieben eine Aktion auslösen. Der vorbestimmte Grenzwert kann so gewählt werden, dass kleinere unproblematische Fehler toleriert werden und dadurch beispielsweise auch falsch positive Ergebnisse verringert werden.

Die beim Überschreiten des Grenzwerts ausgelöste Aktion kann selbstverständlich verschiedenster Art sein. Dies kann von einem einfachen Signal in einer Leitstelle oder einem Führerstand bis zu weiteren automatischen Schritten reichen. Weitere Schritte können beispielsweise sein, dass die Positionsbestimmung fortan die Kartendaten nicht mehr verwendet.

Die erfindungsgemäße Lösung hat den weiteren Vorteil, dass die ansonsten komplexe und fehleranfällige Ermittlung von Fehlern in den Kartendaten automatisiert werden kann und dadurch den nötigen sicherheitstechnischen Anforderungen entspricht. Die erfindungsgemäße Lösung geht dabei davon aus, dass technische oder auch menschliche Fehler bei der Erstellung und Bereitstellung der Kartendaten passieren können. Dabei verwendet die erfindungsgemäße Lösung technische Maßnahmen, um Schäden an Mensch und Technik zu verhindern. Dadurch wird der Komplexität und Fehleranfälligkeit der Kartendaten begegnet und die erfindungsgemäße Lösung kann in vorteilhafter Weise in eine eisenbahntechnische Anlage implementiert werden.

Die Kartendaten, die auch einfach als Karte bezeichnet werden könnten, werden üblicherweise für ein zu befahrendes Gebiet auf dem Fahrzeug vorliegen oder sukzessive dem Fahrzeug über eine vorhandenen Kommunikationsschnittstelle zur Verfügung gestellt.

Für eine einfache Handhabung des Differenzwerts wird dieser vorteilhafter Weise bei der Berechnung des Gesamtfehlerwerts als Absolutwert verwendet.

Erfindungsgemäß werden erlaubte zufällige Fehlerwerte in Form von Vertrauensintervallen für die Sensordaten und die Kartendaten bei der Bestimmung des Fehlerwertes berücksichtigt. Dies hat den Vorteil, dass durch die Einbeziehung der erlaubten Fehlerwerte in Form von üblichen Vertrauensintervallen in die Berechnung des Gesamtfehlerwertes eine so zu sagen automatische Anpassung an die Qualität der Kartendaten bzw. Sensordaten geschieht. Dabei wird der Gesamtfehlerwert nach der folgenden Formel berechnet:

$$Gesamtfehlerwert = \frac{Absolutwert\ des\ Differenzwerts}{Vertrauensintervall\ von\ Sensordaten\ und\ Kartendaten}$$

Bei der Formel steht der Absolutwert oder der Betrag des Differenzwertes im Zähler. Möglicherweise kann bei den Positionswerten aber auch auf den Betrag verzichtet werden, weil die Differenz ggf. immer positiv ist. Im Nenner wird die Quadratwurzel gebildet von einer Summe aus den Quadraten der Standardabweichungen von Kartendaten und Sensordaten. Der Nenner kann also auch als die Vertrauensintervalle aus Sensordaten und Kartendaten bezeichnet werden.

Die erfindungsgemäße Lösung hat vorteilhafte Ausgestaltungen, die im Folgenden beschrieben sind.

Um den zweiten Positionswert besonders einfach berechnen zu können, wird der erste Positionswert bei der Berechnung des zweiten Positionswerts erfindungsgemäß verwendet. Dabei dient der aus den Sensordaten ermittelte erste Positionswert als Basis für die Berechnung mit den Kartendaten. Der erste Positionswert wird dabei in den Kartendaten lokalisiert und anschließend beispielsweise mit dem Gleisverlauf in den Kartendaten verglichen. Eine Querabweichung des ersten Positionswerts zum Gleisverlauf führt dann zu einem mittels der Kartendaten verbesserten zweiten Positionswert, bei dem die Querabweichung reduziert wurde.

Um fehlerhafte Sensordaten als Ursache für einen über dem Grenzwert liegenden Gesamtfehlerwert auszuschließen, können die Sensordaten vor der Berechnung des Differenzwertes, insbesondere mittels weiterer Sensordaten, validiert werden. Beispielsweise können weitere Sensordaten von weiteren Sensormessungen von anderen Sensoren verwendet werden, um größere Abweichungen bei den Sensordaten zu erkennen. Dies kann bedeuten, dass die Sensordaten zunächst aus Rohdaten von verschiedenen Sensoren ermittelt und ggf. fusioniert werden. Diese Rohdaten oder die fusionierten Rohdaten können auch noch durch Rechenverfahren wie z.B. einen Kalman-Filter weiterverarbeitet werden, bevor sie als Sensordaten genutzt werden. Bestehen die Sensordaten diese Validierung, kann beim erfindungsgemäßen Verfahren bei einem Überschreiten des vorbestimmen Grenzwertes von fehlerhaften Kartendaten ausgegangen werden.

Weiterhin können auch die Kartendaten vor der Berechnung des Differenzwertes zusätzlich validiert werden. Hierfür kann beispielsweise bereits in der Vorverarbeitung der Kartendaten auf dem Fahrzeug deren Konsistenz überprüft werden. Bei dieser Prüfung kann beispielsweise folgendes überprüft bzw. ausgeschlossen werden:

- Doppelte Vergabe von Strecken oder Punkten oder anderen IDs;
- Sind alle Streckenteile vorhanden, um die Gesamtstrecke entsprechend den Befahrungsmöglichkeiten befahren zu können? Beispielsweise sind keine Befahrungen um den spitzen Winkel bei Weichen möglich.
- Stimmen die bautechnischen Mindestabstände zwischen parallelen Gleisen, Kurvenradien und Quer- und Längsneigungen?

Ferner können als Sensordaten Positionsdaten, Geschwindigkeitsdaten, Pseudoentfernungsdaten, Orientierungsdaten oder Daten deren zeitliche Änderungen verwendet werden. Aus den Orientierungsdaten aus den Sensordaten kann beispielsweise die Quer- und Längsneigung sowie die Azimutrichtung berechnet werden und anschließend mit den Angaben in den Kartendaten verglichen werden. Dieser Vergleich ist selbstverständlich nur möglich, wenn vorher mit dem ersten Positionswert die Stelle in der Karte gefunden wurde, und weiterhin die Längsneigung, Querneigung und Azimutrichtung in der Karte vorhanden sind. Längsneigung und Azimutrichtung lassen sich auch aus den 3D-Koordinaten der Karte berechnen. Die Querneigung muss in der Karte für die verschiedenen Punkte abgespeichert sein. Alternativ lässt sie sich auch aus zwei Schienensträngen berechnen, wenn sie gegeben sind.

Weiterhin betrifft die Erfindung auch ein Verfahren zur Positionsbestimmung eines spurgeführten Fahrzeugs, insbesondere eines Schienenfahrzeugs, bei dem Sensordaten und Kartendaten verwendet werden. Hierbei ist erfindungsgemäß vorgesehen, dass zur Überprüfung der Kartendaten und Sensordaten das Verfahren nach einer der zuvor genannten Ausführungsformen angewendet wird.

Ferner betrifft die Erfindung auch eine Einrichtung zur Positionsbestimmung eines spurgeführten Fahrzeugs, insbesondere eines Schienenfahrzeugs, bei der Sensordaten und Kartendaten verwendet werden, mit wenigstens einem Sensor, der zum Bereitstellen von Sensordaten ausgebildet ist, mit wenigstens einer Speichereinrichtung, in der Kartendaten abgespeichert sind. Erfindungsgemäß weist diese Einrichtung zur Positionsbestimmung wenigstens eine Einrichtung zur Überprüfung von Kartendaten und Sensordaten nach der zuvor genannten Ausführung auf.

Schließlich betrifft die Erfindung auch ein spurgebundenes Fahrzeug, insbesondere Schienenfahrzeug, das wenigstens eine Einrichtung zur Positionsbestimmung in der zuvor genannten Form aufweist.

Des Weiteren wird ein Computerprogrammprodukt mit Programmbefehlen zur Durchführung des genannten erfindungsgemäßen Verfahrens und/oder dessen Ausführungsbeispielen beansprucht, wobei mittels des Computerprogrammprodukts jeweils das erfindungsgemäße Verfahren und/oder dessen Ausführungsbeispiele durchführbar sind.

Darüber hinaus wird eine Bereitstellungsvorrichtung zum Speichern und/oder Bereitstellen des Computerprogrammprodukts beansprucht. Die Bereitstellungsvorrichtung ist beispielsweise ein Datenträger, der das Computerprogrammprodukt speichert und/oder bereitstellt. Alternativ und/oder zusätzlich ist die Bereitstellungsvorrichtung beispielsweise ein Netzwerkdienst, ein Computersystem, ein Serversystem, insbesondere ein verteiltes Computersystem, ein cloudbasiertes Rechnersystem und/oder virtuelles Rechnersystem, welches das Computerprogrammprodukt vorzugsweise in Form eines Datenstroms speichert und/oder bereitstellt.

Die Bereitstellung erfolgt beispielsweise als Download in Form eines Programmdatenblocks und/oder Befehlsdatenblocks, vorzugsweise als Datei, insbesondere als Downloaddatei, oder als Datenstrom, insbesondere als Downloaddatenstrom, des vollständigen Computerprogrammprodukts. Diese Bereitstellung kann beispielsweise aber auch als partieller Download erfolgen, der aus mehreren Teilen besteht und insbesondere über ein Peer-to-Peer Netzwerk heruntergeladen oder als Datenstrom bereitgestellt wird. Ein solches Computerprogrammprodukt wird beispielsweise unter Verwendung der Bereitstellungsvorrichtung in Form des Datenträgers in ein System eingelesen und führt die Programmbefehle aus, sodass das erfindungsgemäße Verfahren auf einem Computer zur Ausführung gebracht wird oder das Erstellungsgerät derart konfiguriert, dass dieses das erfindungsgemäße Werkstück erzeugt.

Im Folgenden wird die Erfindung mit Bezug auf die beigefügten Zeichnungen erläutert.

Es zeigen:

Figur 1     eine schematische Darstellung einer beispielhaften Ausführungsform einer erfindungsgemäßen Einrichtung zur Überprüfung von Kartendaten und Sensordaten;

Figur 2     eine schematische Darstellung einer beispielhaften Ausführungsform des erfindungsgemäßen Verfahrens zur Überprüfung von Kartendaten und Sensordaten.

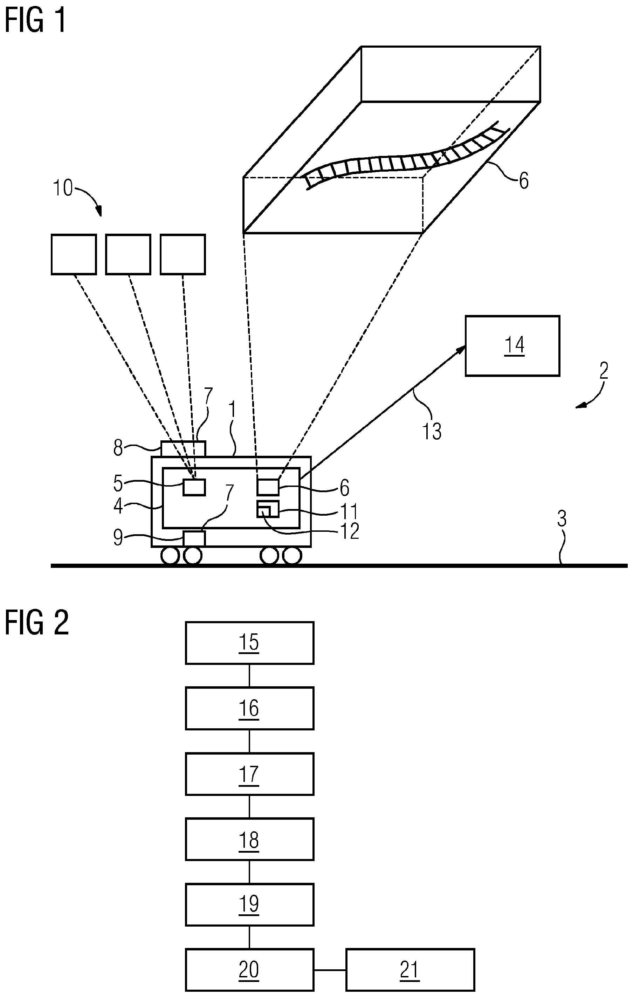

In Figur 1 ist ein Fahrzeug 1 dargestellt, das als Teil einer eisenbahntechnischen Anlage 2 entlang einer Fahrstrecke 3 fährt.

Das Fahrzeug 1 ist ein Schienenfahrzeug, beispielsweise eine Lokomotive, ein Fern- oder Regionalzug oder jede andere Form eines spurgeführten Fahrzeugs. Das Fahrzeug 1 umfasst eine Einrichtung 4 zur Positionsbestimmung, die im Folgenden als Lokalisierungseinrichtung 4 bezeichnet wird. Die Lokalisierungseinrichtung 4 verwendet Sensordaten 5 und Kartendaten 6, um eine aktuelle Position des Fahrzeugs 1 zu bestimmen.

Das Fahrzeug 1 weist weiterhin mehrere Sensoren 7 auf, die die Sensordaten 5 liefern. Selbstverständlich können die Sensordaten 5 vorher auch von einer Recheneinrichtung 12 vorverarbeitet werden. In der beispielhaften Ausführungsform in der Figur weist das Fahrzeug 1 einen GNSS-Sensor 8 und eine inertiale Messeinrichtung 9 auf. Der GNSS-Sensor 8 bestimmt die Position in bekannter Weise mit Hilfe von Satelliten 10. Die inertiale Messeinrichtung 9 besteht aus mehreren Beschleunigungs- und Drehratensensoren und liefert Sensordaten in Form von Orientierung, insbesondere Roll-, Nick- und Gierwinkel oder auch eine zeitliche Veränderung dieser Winkel, die auf die Querlage, Längslage und Azimutale Ausrichtung des Fahrzeugs schließen lassen.

Die Kartendaten 6 sind auf dem Schienenfahrzeug 1 vorhanden oder werden sukzessive über eine nicht dargestellte Kommunikationsschnittstelle zur Verfügung gestellt. Die Kartendaten 6 umfassen einen in der Figur schematisch dargestellten dreidimensionalen Kartenraum, in dem der Gleisverlauf mit verschiedenen Detailinformationen angegeben ist.

Um fehlerhafte Kartendaten 6 oder auch fehlerhafte Sensordaten 5 zu erkennen, weist die Lokalisierungseinrichtung 4 eine Prüfeinrichtung 11 zur Überprüfung von Kartendaten und Sensordaten auf.

Die Prüfeinrichtung 11 umfasst eine Recheneinrichtung 12. Die Recheneinrichtung 12 ist zum Berechnen von wenigstens einem Differenzwert ausgebildet, der aus einem ersten Positionswert und aus einem zweiten Positionswert für die Position des Fahrzeugs 1 berechnet wird. Weiterhin ist die Recheneinrichtung 12 zum Berechnen eines Gesamtfehlerwertes unter Verwendung des Differenzwertes ausgebildet. Dabei wird der erste Positionswert mittels der Sensordaten 5 und der zweite Positionswert mittels der Kartendaten 6 berechnet. In der Recheneinrichtung 12 werden erlaubte zufällige Fehlerwerte in Form von Vertrauensintervallen für die Sensordaten 5 und die Kartendaten 6 insofern berücksichtigt, dass der Absolutwert des Differenzwerts durch die Vertrauensintervalle geteilt wird.

Weiterhin ist die Recheneinrichtung 12 zum Prüfen ausgebildet, ob der Gesamtfehlerwert einen vorbestimmten Grenzwert überschreitet. Wenn dieser Grenzwert überschritten wird, wird in der beispielhaften Ausführungsform in Figur 1 ein Signal 13 ausgelöst. Dies Signal kann beispielsweise einem Zugführer des Fahrzeugs 1 angezeigt oder wie in Figur 1 dargestellt an eine Leitstelle 14 der eisenbahntechnischen Anlage 2 übermittelt wird. Bei einem automatischen Fahrbetrieb ist selbstverständlich kein Zugführer auf dem Fahrzeug.

Die Recheneinrichtung 12 ermittelt den Gesamtfehlerwert somit nach folgender Formel:

$$Gesamtfehlerwert = \frac{\text{Absolutwert des Differenzwerts}}{\text{Vertrauensintervall von Sensordaten und Kartendaten}}$$

Von der Prüfeinrichtung 11 wird im Betrieb des Fahrzeugs 1 das erfindungsgemäße Verfahren zur Überprüfung der Kartendaten 6 und der Sensordaten 5 durchgeführt. Dabei werden die in Figur 2 schematisch dargestellten Verfahrensschritte durchgeführt.

In einem optionalen weiteren Verfahrensschritt 21 wird das Signal 13 ausgegeben, wenn der vorbestimmte Grenzwert durch den Gesamtfehlerwert überschritten ist.

## Patentansprüche

1. Verfahren zur Überprüfung von Kartendaten (6) und Sensordaten (5), wobei die Kartendaten (6) und Sensordaten (5) für eine Positionsbestimmung eines spurgeführten Fahrzeugs, insbesondere eines Schienenfahrzeugs, verwendbar sind,

   bei dem Sensordaten (5) von wenigstens einem Sensor (7) bereitgestellt werden,
   bei dem mittels der Sensordaten (5) wenigstens ein erster Positionswert für eine Position des Fahrzeugs berechnet wird, bei dem mittels der Kartendaten wenigstens ein zweiter Positionswert für die Position des Fahrzeugs berechnet wird, wobei der erste Positionswert bei der Berechnung des zweiten Positionswerts derart verwendet wird, dass der erste Positionswert in den Kartendaten lokalisiert und mit dem Gleisverlauf in den Kartendaten verglichen wird, wobei eine Querabweichung des ersten Positionswerts zum Gleisverlauf zu dem zweiten Positionswert mit reduzierter Querabweichung führt,
   bei dem ein Differenzwert aus dem ersten Positionswert und dem zweiten Positionswert gebildet wird und der Differenzwert für eine Berechnung eines Gesamtfehlerwerts verwendet wird, und
   bei dem geprüft wird, ob der Gesamtfehlerwert einen vorbestimmten Grenzwert überschreitet,
   **dadurch gekennzeichnet, dass** erlaubte Fehlerwerte in Form von Vertrauensintervallen für die Sensordaten (5) und die Kartendaten bei der Berechnung des Gesamtfehlerwertes dadurch einbezogen werden, dass der Absolutwert des Differenzwertes geteilt wird durch die Quadratwurzel von einer Summe aus den Quadraten der Standardabweichungen von Kartendaten und Sensordaten.

2. Verfahren nach Anspruch 1,
   **dadurch gekennzeichnet, dass**
   die Sensordaten (5) vor der Berechnung des Differenzwertes, insbesondere mittels weiterer Sensordaten (5), validiert werden.

3. Verfahren nach einem der oben genannten Ansprüche,
   **dadurch gekennzeichnet, dass**
   die Kartendaten (6) vor der Berechnung des Differenzwertes dadurch validiert werden, dass in einer Vorverarbeitung der Kartendaten auf dem Fahrzeug deren Konsistenz überprüft wird.

4. Verfahren nach einem der oben genannten Ansprüche,
   **dadurch gekennzeichnet, dass**
   als Sensordaten (5) Positionsdaten, Geschwindigkeitsdaten, Pseudoentfernungsdaten, Orientierungsdaten oder deren zeitliche Veränderungen verwendet werden.

5. Verfahren zur Positionsbestimmung eines spurgeführten Fahrzeugs, insbesondere eines Schienenfahrzeugs,

bei dem Sensordaten (5) und Kartendaten (6) verwendet werden,
**dadurch gekennzeichnet, dass**
zur Überprüfung der Kartendaten (6) und Sensordaten (5) das Verfahren nach einer der oben genannten Ansprüche angewendet wird.

6. Einrichtung zur Überprüfung von Kartendaten (6) und Sensordaten (5), wobei die Kartendaten (6) und Sensordaten (5) für eine Positionsbestimmung eines spurgeführten Fahrzeugs, insbesondere eines Schienenfahrzeugs, verwendbar sind,

> mit wenigstens einer Recheneinrichtung (12), die zum Berechnen von wenigstens einem Differenzwert aus einem ersten Positionswert und einem zweiten Positionswert für eine Position des Fahrzeugs und zum Berechnen von einem Gesamtfehlerwert unter Verwendung des Differenzwerts ausgebildet ist,
> wobei der erste Positionswert mittels der Sensordaten (5) und der zweite Positionswert mittels der Kartendaten (6) berechnet wird, wobei der erste Positionswert bei der Berechnung des zweiten Positionswerts derart verwendet wird, dass der erste Positionswert in den Kartendaten lokalisiert und mit dem Gleisverlauf in den Kartendaten verglichen wird,
> wobei eine Querabweichung des ersten Positionswerts zum Gleisverlauf zu dem zweiten Positionswert mit reduzierter Querabweichung führt,
> und wobei die Recheneinrichtung (12) zum Prüfen ausgebildet ist, ob der Gesamtfehlerwert einen vorbestimmten Grenzwert überschreitet, **dadurch gekennzeichnet, dass** erlaubte Fehlerwerte in Form von Vertrauensintervallen für die Sensordaten (5) und die Kartendaten bei der Berechnung des Gesamtfehlerwertes dadurch einbezogen werden, dass der Absolutwert des Differenzwertes geteilt wird durch die Quadratwurzel von einer Summe aus den Quadraten der Standardabweichungen von Kartendaten und Sensordaten.

7. Einrichtung zur Positionsbestimmung eines spurgeführten Fahrzeugs, insbesondere eines Schienenfahrzeugs,

> bei der Sensordaten (5) und Kartendaten (6) verwendet werden, mit wenigstens einem Sensor (7), der zum Bereitstellen von Sensordaten (5) ausgebildet ist,
> mit wenigstens einer Speichereinrichtung, in der Kartendaten (6) abgespeichert sind,
> und mit einer
> Einrichtung zur Überprüfung von Kartendaten (6) und Sensordaten (5) nach Anspruch 6.

8. Spurgeführtes Fahrzeug, insbesondere Schienenfahrzeug,
wobei
das Fahrzeug wenigstens eine Einrichtung zur Positionsbestimmung nach Anspruch 7 aufweist.

9. Computerprogrammprodukt mit Programmbefehlen zur Durchführung des Verfahrens nach einem der Ansprüche 1 bis 5.

10. Bereitstellungsvorrichtung für das Computerprogrammprodukt nach Anspruch 9, wobei die Bereitstellungsvorrichtung das Computerprogrammprodukt speichert und/oder bereitstellt.

**Claims**

1. Method for checking map data (6) and sensor data (5),

> wherein the map data (6) and sensor data (5) can be used for position determination of a track-guided vehicle, in particular a rail vehicle,
> in which the sensor data (5) is provided by at least one sensor (7),
> in which at least one first position value for a position of the vehicle is calculated by means of the sensor data (5),
> in which at least one second position value for the position of the vehicle is calculated by means of the map data,
> wherein the first position value is used in the calculation of the second position value in such a manner that the first position value is localised in the map data and compared with the track flow in the map data, wherein a transverse deviation of the first position value in relation to the track flow leads to the second position value with reduced transverse deviation,
> in which a difference value is formed from the first position value and the second position value and the difference value is used for a calculation of a total error value, and

in which it is checked whether the total error value exceeds a predetermined limit value, **characterised in that** allowed error values in the form of trust intervals for the sensor data (5) and the map data are taken into consideration in the calculation of the total error value **in that** the absolute value of the difference value is divided by the square root of a sum of the squares of the standard deviations of the map data and sensor data.

2. Method according to claim 1, **characterised in that** the sensor data (5) is validated before the calculation of the difference value, in particular by means of further sensor data (5).

3. Method according to one of the claims mentioned above, **characterised in that** the map data (6) is validated before the calculation of the difference value **in that**, when preprocessing the map data on the vehicle, the consistency thereof is checked.

4. Method according to one of the claims mentioned above, **characterised in that** position data, speed data, pseudodistance data, orientation data or the changes thereof over time are used as sensor data (5).

5. Method for position determination of a track-guided vehicle, in particular a rail vehicle,

   in which sensor data (5) and map data (6) are used, **characterised in that** the method according to one of the claims mentioned above is used to check the map data (6) and sensor data (5).

6. Facility for checking map data (6) and sensor data (5), wherein the map data (6) and sensor data (5) can be used for position determination of a track-guided vehicle, in particular a rail vehicle,

   with at least one computing facility (12), which is embodied for calculating at least one difference value consisting of a first position value and a second position value for a position of the vehicle and for calculating a total error value using the difference value,
   wherein the first position value is calculated by means of the sensor data (5) and the second position value is calculated by means of the map data (6), wherein the first position value is used in the calculation of the second position value in such a manner that the first position value is localised in the map data and compared with the track flow in the map data,
   wherein a transverse deviation of the first position value in relation to the track flow leads to the second position value with reduced transverse deviation,
   and wherein the computing facility (12) is embodied for checking whether the total error value exceeds a predetermined limit value, **characterised in that** allowed error values in the form of trust intervals for the sensor data (5) and the map data are taken into consideration in the calculation of the total error value **in that** the absolute value of the difference value is divided by the square root of a sum of the squares of the standard deviations of the map data and sensor data.

7. Facility for position determination of a track-bound vehicle, in particular a rail vehicle,

   in which sensor data (5) and map data (6) are used,
   with at least one sensor (7) that is embodied for providing sensor data (5),
   with at least one storage facility, in which map data (6) is stored,
   and with a facility for checking map data (6) and sensor data (5) according to claim 6.

8. Track-guided vehicle, in particular rail vehicle, wherein the vehicle has at least one facility for position determination according to claim 7.

9. Computer program product with program commands for performing the method according to one of claims 1 to 5.

10. Provision apparatus for the computer program product according to claim 9, wherein the provision apparatus stores and/or provides the computer program product.

## Revendications

1. Procédé de contrôle de données (6) de carte et de données (5) de capteur, dans lequel les données (6) de carte et les données (5) de capteur peuvent être utilisées pour la détermination de la position d'un véhicule guidé en rail, en particulier d'un véhicule ferroviaire,

   dans lequel on dispose de données (5) de capteur par au moins un capteur (7),
   dans lequel, au moyen des données (5) de capteur, on calcule au moins une première valeur de position pour une position du véhicule, dans lequel, au moyen des données de carte, on calcule au moins une deuxième valeur de position pour la position du véhicule, dans lequel on utilise la première valeur de position lors du calcul de la deuxième valeur de position, de manière à localiser la première valeur de position dans les données de carte et à la comparer au tracé de voies dans les données de carte, dans lequel un écart transversal de la première valeur de position au tracé de voies conduit à la deuxième valeur de position ayant un écart transversal réduit,
   dans lequel on forme une valeur de différence composée de la première valeur de position et de la deuxième valeur de position et on utilise la valeur de différence pour le calcul d'une valeur d'erreur d'ensemble, et
   dans lequel on contrôle si la valeur d'erreur d'ensemble dépasse une valeur limite déterminée à l'avance,
   **caractérisé en ce que**
   l'on incorpore des valeurs d'erreur permises, sous la forme d'intervalles de confiance, pour les données (5) de capteur et les données de carte, lors du calcul de la valeur d'erreur d'ensemble, par le fait que l'on divise la valeur absolue de la valeur de différence par la racine carrée d'une somme composée des carrés des écart-types des données de carte et des données de capteur.

2. Procédé suivant la revendication 1,
   **caractérisé en ce que**
   l'on valide les données (5) de capteur avant le calcul de la valeur de différence, en particulier au moyen d'autres données (5) de capteur.

3. Procédé suivant l'une des revendications mentionnées ci-dessus,
   **caractérisé en ce que**
   l'on valide les données (6) de carte avant le calcul de la valeur de différence, par le fait que l'on contrôle leur cohérence dans un traitement préalable des données de carte sur le véhicule.

4. Procédé suivant l'une des revendications mentionnées ci-dessus,
   **caractérisé en ce que**
   l'on utilise, comme données (5) de capteur, des données de position, des données de vitesse, des données de pseudo éloignement, des données d'orientation ou leurs variations en fonction du temps.

5. Procédé de détermination de la position d'un véhicule guidé sur rail, en particulier d'un véhicule ferroviaire, dans lequel on utilise des données (5) de capteur et des données (6) de carte, **caractérisé en ce que**,
   pour le contrôle des données (6) de carte et des données (5) de capteur, on applique le procédé suivant l'une des revendications mentionnées ci-dessus.

6. Dispositif de contrôle de données (6) de carte et de données (5) de capteur, dans lequel les données (6) de carte et les données (5) de capteur peuvent être utilisées pour la détermination de position d'un véhicule guidé sur rail, en particulier d'un véhicule ferroviaire,

   comprenant au moins un dispositif (12) informatique, qui est constitué pour le calcul d'au moins une valeur de différence composée d'une première valeur de position et d'une deuxième valeur de position pour une position du véhicule et pour le calcul d'une valeur d'erreur d'ensemble en utilisant la valeur de différence, dans lequel on calcule la première valeur de position au moyen des données (5) de capteur et la deuxième valeur de position au moyen des données (6) de carte, dans lequel on utilise la première valeur de position lors du calcul de la deuxième valeur de position, de manière à localiser la première valeur de position dans les données de carte et à la comparer au tracé de voies dans les données de carte,
   dans lequel un écart transversal de la première valeur de position au tracé de voies conduit à la deuxième valeur de position ayant un écart transversal réduit,

et dans lequel le dispositif (12) informatique est constitué pour contrôler si la valeur d'erreur d'ensemble dépasse une valeur limite déterminée à l'avance, **caractérisé en ce que**
l'on incorpore des valeurs d'erreur permises, sous la forme d'intervalles de confiance, pour les données (5) de capteur et les données de cartes, lors du calcul de la valeur d'erreur d'ensemble, par le fait que l'on divise la valeur absolue de la valeur de différence par la racine carrée d'une somme composée des carrés des écart-types des données de carte et des données de capteur.

7. Dispositif de détermination de la position d'un véhicule guidé sur rail, en particulier d'un véhicule ferroviaire, dans lequel des données (5) de capteur et des données (6) de carte sont utilisées, comprenant au moins un capteur (7), qui est constitué pour disposer de données (5) de capteur,

   comprenant au moins un dispositif de mémoire, dans lequel les données (6) de carte sont mises en mémoire, et comprenant un dispositif de contrôle de données (6) de carte et de données (5) de capteur suivant la revendication 6.

8. Véhicule guidé sur rail, en particulier véhicule ferroviaire, dans lequel
   le véhicule a au moins un dispositif de détermination de la position suivant la revendication 7.

9. Produit de programme d'ordinateur comprenant des instructions de programme pour exécuter le procédé suivant l'une des revendications 1 à 5.

10. Dispositif de mise à disposition du produit de programme d'ordinateur suivant la revendication 9, dans lequel le dispositif de mise à disposition met en mémoire et/ou met à disposition le produit de programme d'ordinateur.

FIG 1

FIG 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2009210154 A1
- DE 102019218611 A1